# EUROPEAN PATENT APPLICATION

(11) **EP 4 637 063 A1**
(43) Date of publication of application: **22.10.2025**
(21) Application number: 22968266.1
(22) Date of filing: 16.12.2022
(51) Int. Cl.: H04L 1/18

(54) **HYBRID AUTOMATIC REPEAT REQUEST (HARQ) CONFIGURATION METHOD, AND APPARATUS**

(71) Applicant: Beijing Xiaomi Mobile Software Co., Ltd., Beijing 100085 (CN)
(72) Inventor: ZHU, Yajun, Beijing 100085 (CN)
(74) Representative: Stöckeler, Ferdinand
(86) International application number: PCT/CN2022/139715
(87) International publication number: WO 2024/124562

(57) **Abstract**

Disclosed in embodiments of the present disclosure are a hybrid automatic repeat request (HARQ) configuration method, and an apparatus, which can be applied to the technical field of communications. The method executed by a terminal device comprises: obtaining an HARQ configuration instruction; and according to the configuration instruction, performing validity configuration on one or more HARQ processes among HARQ processes supported by the terminal device. Therefore, the terminal device may timely and accurately determine, according to the configuration instruction, an HARQ feedback operation corresponding to the one or more HARQ processes among the supported HARQ processes, so as to perform validity configuration on the HARQ processes.

## Description

### TECHNICAL FIELD

The present invention relates to the field of communication technology, in particular to a method for configuring a hybrid automatic repeat request (HARQ) and a device.

### BACKGROUND

The emergence of new Internet applications such as a new generation of virtual reality (VR)/augmented reality (AR), vehicle-to-vehicle communications, etc. has put forward higher requirements for wireless communication technology, driving the continuous evolution of wireless communication technology to meet application requirements. In the research of wireless communication technology, satellite communication is considered to be an important aspect of future wireless communication technology. Satellite communication refers to communication between terrestrial radio communication devices with satellites as relays.

In satellite communication scenarios, a larger latency of data transmission may be caused due to a long signal transmission distance between a transmitter and a receiver. For some terminals, HARQ stalling may occur. In order to avoid HARQ stalling, which reduces a transmission rate of the terminal and further reduces the performance of the communication system, HARQ disabling has been introduced. That is, for a certain HARQ process, if HARQ disabling is configured, the terminal does not need to feedback HARQ information for downlink (DL) transmission of the HARQ process. Therefore, how to configure the HARQ for the terminal becomes a problem to be solved urgently.

### SUMMARY

The embodiments of the present invention provide a method for configuring a HARQ and a device.

According to a first aspect of embodiments of the present invention, a method for configuring a HARQ is provided. The method is performed by a terminal, and includes:
obtaining a HARQ configuration instruction; and
performing an effectiveness configuration for one or more of HARQ processes supported by the terminal according to the configuration instruction.

In the present invention, the terminal obtains the HARQ configuration instruction, and performs an effectiveness configuration for one or more of HARQ processes supported by the terminal according to the configuration instruction. Therefore, the terminal can accurately determine the HARQ feedback operations corresponding to one or more HARQ processes of the supported HARQ processes according to the configuration instruction in a timely manner, and performs the effectiveness configuration for the HARQ processes.

According to a second aspect of embodiments of the present invention, a method for configuring a HARQ is provided. The method is performed by a network device, and includes:
sending a HARQ configuration instruction, in which the configuration instruction is used for performing an effectiveness configuration for one or more of HARQ processes supported by a terminal.

According to a third aspect of embodiments of the present invention, a terminal is provided. The terminal includes:
a transceiver module, configured to obtain a HARQ configuration instruction; and
a processing module, configured to perform an effectiveness configuration for one or more of HARQ processes supported by the terminal according to the configuration instruction.

According to a fourth aspect of embodiments of the present invention, a network device is provided. The network device includes:
a transceiver module, configured to send a HARQ configuration instruction, in which the configuration instruction is used for performing an effectiveness configuration for one or more of HARQ processes supported by a terminal.

According to a fifth aspect of embodiments of the present invention, a communication device is provided. The communication device includes: a processor and a memory having computer programs stored thereon. When the processor executes the computer programs stored in the memory, the communication device is caused to implement the method described in the embodiments of the first aspect.

According to a sixth aspect of embodiments of the present invention, a communication device is provided. The communication device includes: a processor and a memory having computer programs stored thereon. When the processor executes the computer programs stored in the memory, the communication device is caused to implement the method described in the embodiments of the second aspect.

According to a seventh aspect of embodiments of the present invention, a communication device is provided. The communication device includes: a processor and an interface circuit. The interface circuit is configured to receive code instructions and transmit the code instructions to the processor. The processor is configured to run the code instructions to cause the device to perform the method described in the embodiments of the first aspect.

According to an eighth aspect of embodiments of the present invention, a communication device is provided. The communication device includes: a processor and an interface circuit. The interface circuit is configured to receive code instructions and transmit the code instructions to the processor. The processor is configured to run the code instructions to cause the device to perform the method described in the embodiments of the second aspect.

According to a ninth aspect of embodiments of the present invention, a communication system is provided. The system includes the communication device described in the third aspect and the communication device described in the fourth aspect. Or, the system includes the communication device described in the fifth aspect and the communication device described in the sixth aspect. Or, the system includes the communication device described in the seventh aspect and the communication device described in the eighth aspect. Or, the system includes the communication device described in the ninth aspect and the communication device described in the tenth aspect.

According to a tenth aspect of embodiments of the present invention, a computer readable storage medium is provided. The computer readable storage medium is configured to store instructions. When the instructions are executed, the method described in the embodiments of the first aspect is implemented.

According to an eleventh aspect of embodiments of the present invention, a computer readable storage medium is provided. The computer readable storage medium is configured to store instructions. When the instructions are executed, the method described in the embodiments of the second aspect is implemented.

According to a twelfth aspect of embodiments of the present invention, a computer program product is provided. When the computer program product is run by a computer, the computer is caused to implement the method of embodiments of the first aspect.

According to a thirteenth aspect of embodiments of the present invention, a computer program product is provided. When the computer program product is run by a computer, the computer is caused to implement the method of embodiments of the second aspect.

According to a fourteenth aspect of the present invention, a chip system is provided. The chip system includes at least one processor and an interface for supporting the terminal in realizing the functions involved in the first aspect, e.g., determining or processing at least one of data or information involved in the method described above. In a possible design, the chip system further includes a memory. The memory is configured to store necessary computer programs and data of the terminal. The chip system may consist of chips or may include a chip and other discrete components.

According to a fifteenth aspect of the present invention, a chip system is provided. The chip system includes at least one processor and an interface for supporting the terminal in realizing the functions involved in the second aspect, e.g., determining or processing at least one of data or information involved in the method described above. In a possible design, the chip system further includes a memory. The memory is configured to store necessary computer programs and data of the terminal. The chip system may consist of chips or may include a chip and other discrete components.

According to a sixteenth aspect of the present invention, a computer program is provided. When the computer program is running on a computer, the computer is caused to implement the method of the first aspect.

According to a seventeenth aspect of the present invention, a computer program is provided. When the computer program is running on a computer, the computer is caused to implement the method of the second aspect.

Additional aspects and advantages of the present invention will be given in part in the following descriptions, become apparent in part from the following descriptions, or be learned from the practice of the present invention.

### BRIEF DESCRIPTION OF THE DRAWINGS

In order to clearly illustrate technical solutions of the embodiments of the present invention or the background technologies, a description of drawings used in the embodiments of the present invention or the background technologies is given below.
FIG. 1 is a structural diagram of a communication system provided by an embodiment of the present invention.
FIG. 2 is a flowchart of a method for configuring a HARQ provided by an embodiment of the present invention.
FIG. 3 is a flowchart of a method for configuring a HARQ provided by an embodiment of the present invention.
FIG. 4 is a flowchart of a method for configuring a HARQ provided by an embodiment of the present invention.
FIG. 5 is a flowchart of a method for configuring a HARQ provided by an embodiment of the present invention.
FIG. 6 is a flowchart of a method for configuring a HARQ provided by an embodiment of the present invention.
FIG. 7 is a flowchart of a method for configuring a HARQ provided by an embodiment of the present invention.
FIG. 8 is a flowchart of a method for configuring a HARQ provided by an embodiment of the present invention.
FIG. 9 is a flowchart of a method for configuring a HARQ provided by an embodiment of the present invention.
FIG. 10 is a flowchart of a method for configuring a HARQ provided by an embodiment of the present invention.
FIG. 11 is a schematic diagram of a communication device provided by an embodiment of the present invention.
FIG. 12 is a schematic diagram of another communication device provided by an embodiment of the present invention.
FIG. 13 is a schematic diagram of a chip provided by an embodiment of the present invention.

### DETAILED DESCRIPTION

In order to facilitate understanding, the terms involved in the present invention are first introduced.

### 1. Hybrid automatic repeat request (HARQ)

HARQ is a new communication technology based on forward error correction (FEC) and automatic repeat-request (ARQ) for better performance of anti-interference and anti-fading, and improving system throughput (spectral efficiency) and data transmission reliability.

### 2. Downlink control information (DCI)

DCI is control information related to a physical downlink shared channel (PDSCH) and a physical uplink shared channel (PUSCH) and transmitted on a physical downlink control channel (PDCCH), which contains some relevant contents such as resource block (RB) allocation information and modulation mode.

### 3. HARQ disabling

HARQ disabling means that after receiving a HARQ, a receiver does not need to feed back a HARQ acknowledgement (ACK) message or a HARQ negative acknowledgement (NACK) message to a transmitter.

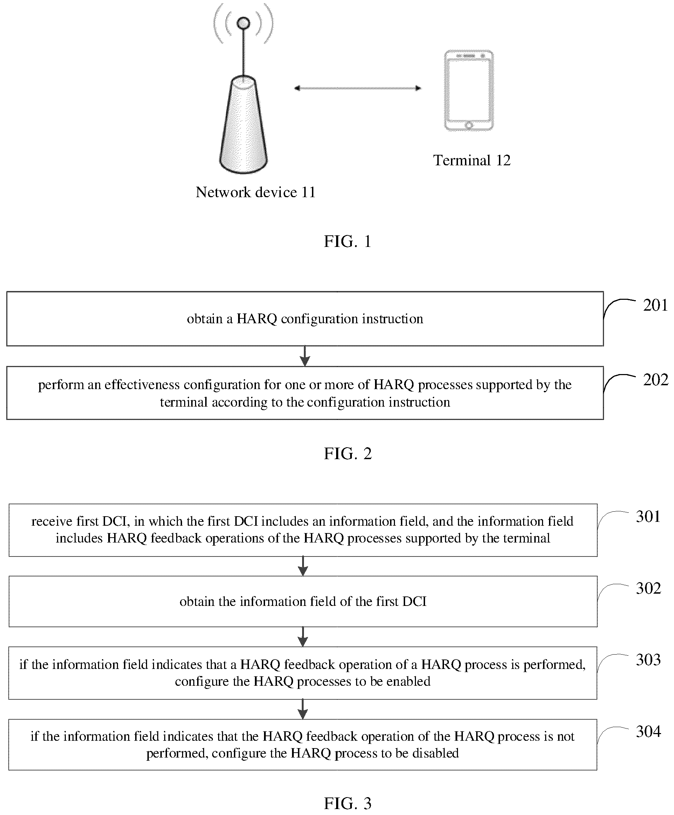

As illustrated in FIG. 1, FIG. 1 is a schematic diagram of a communication system according to an embodiment of the present invention. The communication system may include, but is not limited to, one network device and one terminal. The number and the form of devices in FIG. 1 are only illustrated as examples and do not constitute a limitation on the embodiments of the present invention, and two or more network devices and two or more terminals may be included in practical applications. The communication system illustrated in FIG. 1 includes, for example, one network device 11 and one internet of things (IoT) terminal 12.

It is noteworthy that the technical solution of the embodiments of the present invention can be applied to various communication systems, such as, a long term evolution (LTE) system, a 5th generation (5G) mobile communication system, a 5G new radio (NR) system, or other future new mobile communication systems.

In an embodiment of the present invention, the network device 11 in the communication system is an entity on a network side for transmitting or receiving signals. For example, the network device 11 may be an evolved NodeB (eNB), a transmission reception point (TRP), a next generation NodeB (gNB) in a NR system, a base station in other future mobile communication systems or an access node in a wireless fidelity (Wi-Fi) system, and satellites. The specific technology and specific device form adopted by the network device are not limited in the embodiments of the present invention. The network device according to the embodiments of the present invention may be composed of a central unit (CU) and a distributed unit (DU). The CU may also be called control unit. The use of CU-DU structure allows to divide a protocol layer of the network device, such as a base station, such that some protocol layer functions are placed in the CU for centralized control, and some or all of the remaining protocol layer functions are distributed in the DU, which is centrally controlled by the CU.

The terminal 12 in the embodiments of the present invention is an entity on a user side for receiving or transmitting signals. The terminal may also be referred to as terminal, user equipment (UE), mobile station (MS), mobile terminal (MT), and the like. The terminal may be a car with communication functions, a smart car, a mobile phone, a wearable device, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, an IoT terminal, etc. The specific technology and specific device form adopted by the terminal are not limited in the embodiments of the present invention.

It is understandable that the communication system is introduced first in the embodiments of the present invention to clearly illustrate the technical solution of the embodiments of the present invention, and does not constitute a limitation on the technical solution of the embodiments of the present invention. It is understandable by those skilled in the art that as system architectures evolve and new business scenarios emerge, the technical solution according to the embodiments of the present invention is also applicable to similar technical problems.

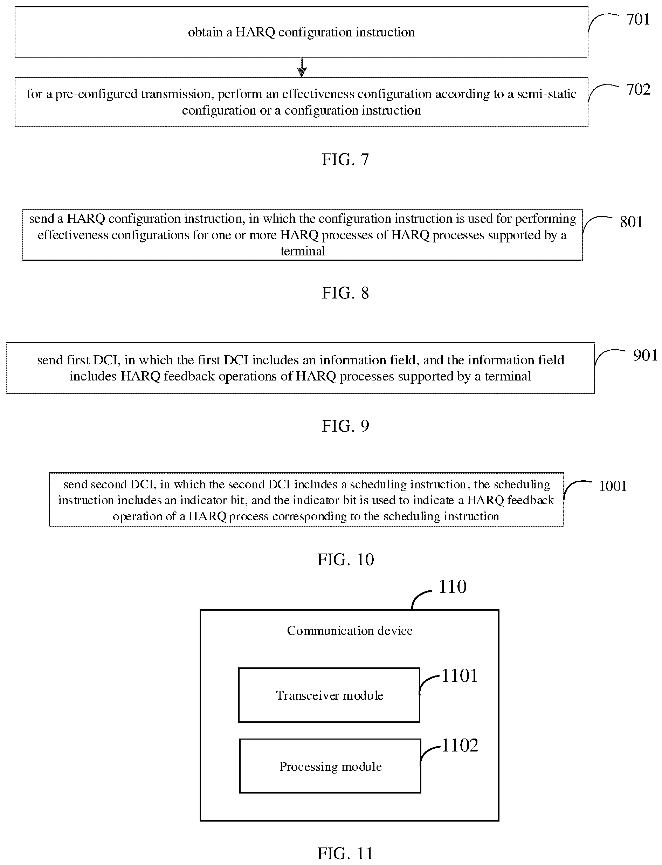

In the communication system, the terminal 12 can implement the method shown in any one of the embodiments of FIG. 2 to FIG. 7 of the present invention, and the network device 11 can implement the method shown in any one of the embodiments of FIG. 8 to FIG. 10.

It is understandable that the communication system is described in the embodiments of the present invention to clearly illustrate the technical solution of the embodiments of the present invention, and does not constitute a limitation on the technical solution of the embodiments of the present invention. It is understandable by those skilled in the art that as system architectures evolve and new business scenarios emerge, the technical solution according to the embodiments of the present invention is also applicable to similar technical problems.

It is understandable that although the terms "first", "second", and "third" are used in the embodiments of the present invention to describe various types of information, the information should not be limited by these terms. These terms are only used to distinguish the same type of information from each other. For example, without departing from the scope of the embodiments of the present invention, the first information may also be referred to as the second information, and similarly, the second information may also be referred to as the first information. Depending on the context, the term "in response to" as used herein may be interpreted as "when", "upon" or "if". For the purposes of brevity and ease of understanding, the terms "greater than" or "less than", "higher than" or "lower than" are used herein to represent size relationships. Those skilled in the art understand that the term "greater than" also covers the meaning of "greater than or equal to" and the term "less than" also covers the meaning of "less than or equal to", and the term "higher than" also covers the meaning of "higher than or equal to", and the term "lower than" also covers the meaning of "lower than or equal to".

A method for configuring a HARQ provided by the embodiments of the present invention will be described in detail below with reference to the flowcharts.

FIG. 2 is a flowchart of a method for configuring a HARQ provided by an embodiment of the present invention. The method provided in this embodiment is performed by a terminal. As illustrated in FIG. 2, the method includes, but is not limited to, the following steps.

At step 201, a HARQ configuration instruction is obtained.

The HARQ configuration instruction is used to indicate whether HARQ feedback operations of one or more of HARQ processes supported by the terminal are supported.

In an embodiment of the present invention, the terminal receives the HARQ configuration instruction sent by a network device. The configuration instruction may be a radio resource control (RRC) signaling, a medium access control control element (MAC CE), a physical layer signaling, or DCI, which is not limited in the present invention.

There may be one or more HARQ configuration instructions. That is, the DCI may carry configuration instructions of one or more HARQ processes, or the RRC signaling may carry configuration instructions of one or more HARQ processes, or the MAC CE may carry configuration instructions of one or more HARQ processes, which is not limited in the present invention.

At step 202, effectiveness configurations are performed for one or more of HARQ processes supported by the terminal according to the configuration instruction.

In an embodiment of the present invention, if the configuration instruction indicates that the HARQ feedback operation of the HARQ process is performed, the HARQ process is configured to be enabled. If the configuration instruction indicates that the HARQ feedback operation of the HARQ process is not performed, the HARQ process is configured to be disabled.

For example, the configuration instruction indicates the HARQ feedback operations of three HARQ processes at the same time, if it indicates that the HARQ feedback operation of a HARQ process 1 is performed, the effectiveness configuration of the HARQ process 1 is enabled; if it indicates that the HARQ feedback operation of a HARQ process 2 is not performed, the effectiveness configuration of the HARQ process 2 is disabled; and if it indicates that the HARQ feedback operation of a HARQ process 3 is not performed, the effectiveness configuration of the HARQ process 3 is disabled.

In the present invention, the terminal obtains the HARQ configuration instruction, and performs the effectiveness configurations for one or more of HARQ processes supported by the terminal according to the configuration instruction. Therefore, the terminal can accurately determine the HARQ feedback operations corresponding to one or more HARQ processes of the supported HARQ processes according to the configuration instruction in a timely manner, and performs the effectiveness configurations for the HARQ processes.

FIG. 3 is a flowchart of another method for configuring a HARQ provided by an embodiment of the present invention. The method provided in this embodiment is performed by a terminal. As illustrated in FIG. 3, the method includes, but is not limited to, the following steps.

At step 301, first DCI is received, in which the first DCI includes an information field, and the information field includes a HARQ feedback operation of each HARQ process supported by the terminal.

In this embodiment of the present invention, the first DCI may be DCI that carries control information, and the HARQ feedback operations of all target HARQ processes supported by the terminal are carried in a preset or configurable information field of the first DCI.

In an embodiment of the present invention, information corresponding to each bit in the information field is used to indicate a HARQ feedback operation of a corresponding HARQ process. For example, the bit value "1" indicates that the HARQ feedback operation of the HARQ process is not performed, and the bit value "0" indicates that the HARQ feedback operation of the HARQ process is performed.

For example, if the terminal is configured with eight HARQ processes, the HARQ feedback operations of the eight HARQ processes can be indicated by eight bits in the information field of the first DCI.

In an embodiment of the present invention, a correspondence relationship between a bit sequence number and a HARQ process number can be predefined or pre-configured, so that the terminal can accurately determine which target HARQ process each bit in the information field indicates.

In an embodiment of the present invention, the first DCI may also include a target duration, and the HARQ feedback operation of the HARQ process indicated by the first DCI is effective within the target duration.

In some embodiments, the first DCI may configure a corresponding target duration for each HARQ process, and the target durations corresponding to each HARQ process may be the same or different, which is not limited herein.

In some implementations, the terminal can obtain a set of information on the duration in a predefined way or by receiving the configuration information sent by the network device, and then determine which duration to use through the information field used to indicate the target duration in the first DCI.

At step 302, the information field of the first DCI is obtained.

In an embodiment of the present invention, the terminal can determine where the information field is in the first DCI according to a protocol or an indication from the network device, so that it can obtain the information field from the first DCI based on information and a corresponding position.

At step 303, if the information field indicates that a HARQ feedback operation of a HARQ process is performed, the HARQ processes is configured to be enabled.

At step 304, if the information field indicates that the HARQ feedback operation of the HARQ process is not performed, the HARQ process is configured to be disabled.

In this embodiment of the present invention, after obtaining the information field of the first DCI, whether the HARQ feedback operation of the HARQ process is enabled or disabled can be determined according to information contained in the information field, and then the effectiveness configuration can be performed for the HARQ process.

In some embodiments, if the information corresponding to each bit in the information field is used to indicate a HARQ feedback operation of a HARQ process, the HARQ feedback operation of each HARQ process can be determined according to the predefined or preconfigured correspondence relationship between the bit sequence number and the HARQ process number.

For example, the terminal determines that in the information field, "1" indicates that the HARQ feedback operation of the HARQ process is not performed, and "0" indicates that the HARQ feedback operation of the HARQ process is performed according to the protocol or the indication from the network device, if a bit corresponding to a HARQ process is "1", the HARQ feedback operation of the HARQ process is determined to be not performed, and the HARQ process is configured to be disabled. If the bit corresponding to the HARQ process is "0", the HARQ feedback operation of the HARQ process is determined to be performed, and the HARQ process is configured to be enabled.

In the present invention, the terminal device receives the first DCI (including the information field that contains HARQ feedback operations of each HARQ process supported by the terminal), and then obtains the information field of the first DCI. If the information field indicates that the HARQ feedback operation of the HARQ process is performed, the HARQ processes is configured to be enabled. If the information field indicates that the HARQ feedback operation of the HARQ process is not performed, the HARQ process is configured to be disabled. Therefore, the terminal can accurately determine the HARQ feedback operations corresponding to the HARQ processes supported by the terminal according to the information field in the first DCI in a timely manner, and perform the effectiveness configurations for the HARQ processes.

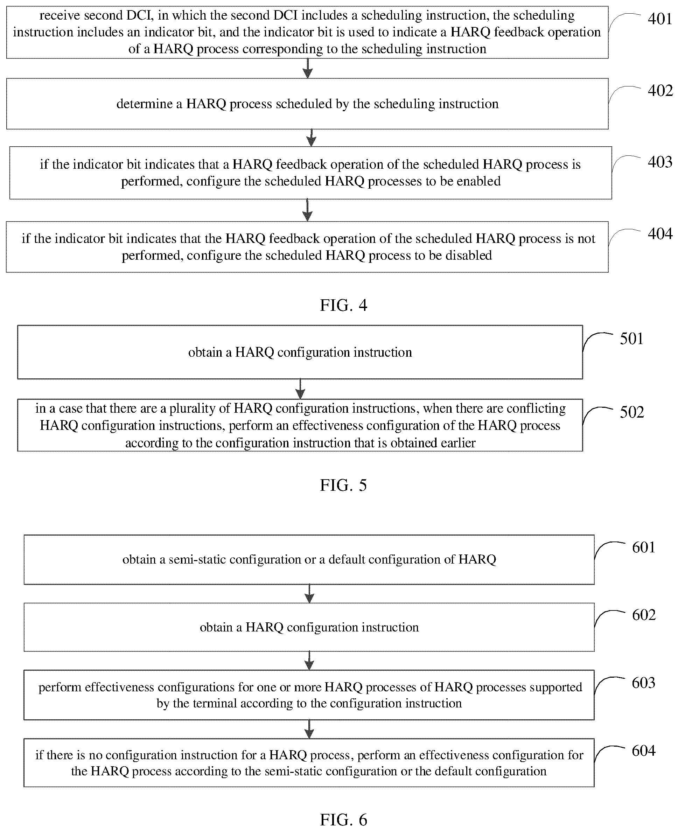

FIG. 4 is a flowchart of another method for configuring a HARQ provided by an embodiment of the present invention. The method provided in this embodiment is performed by a terminal. As illustrated in FIG. 4, the method includes, but is not limited to, the following steps.

At step 401, second DCI is received, in which the second DCI includes a scheduling instruction, the scheduling instruction includes an indicator bit, and the indicator bit is used to indicate a HARQ feedback operation of a HARQ process corresponding to the scheduling instruction.

In the embodiments of the present invention, the second DCI may be DCI that carries the scheduling instruction. After receiving the second DCI, the terminal determines the HARQ feedback operation of the HARQ process scheduled by the scheduling instruction according to the indicator bit contained in the scheduling instruction.

The indicator bit is a bit in the scheduling instruction. In an embodiment of the present invention, if the indicator bit is "1", it indicates that the HARQ feedback operation of the HARQ process scheduled by the scheduling instruction is not performed, and if the indicator bit is "0", it indicates that the HARQ feedback operation of the HARQ process scheduled by the scheduling instruction is performed.

For example, if the terminal is configured with eight HARQ processes, when the terminal receives the scheduling instruction contained in the second DCI and schedules data transmission of HARQ process 1, the HARQ feedback operation of the HARQ process 1 can be determined according to the one corresponding indicator bit in the scheduling instruction.

In an embodiment of the present invention, the second DCI includes a target duration, and the HARQ feedback operation of the HARQ process indicated by the second DCI is effective within the target duration.

In some implementations, the terminal obtain a set of information on the duration in a predefined way or by receiving the configuration information sent by the network device, and then determine the target duration corresponding to the scheduled HARQ process through the information field used to indicate the target duration of the scheduled HARQ process in the second DCI.

At step 402, a HARQ process scheduled by the scheduling instruction is determined.

At step 403, if the indicator bit indicates that a HARQ feedback operation of the scheduled HARQ process is performed, the scheduled HARQ processes is configured to be enabled.

At step 404, if the indicator bit indicates that the HARQ feedback operation of the scheduled HARQ process is not performed, the scheduled HARQ process is configured to be disabled.

In this embodiment of the present invention, after the second DCI is obtained, the HARQ feedback operation of the HARQ process scheduled by the scheduling instruction is determined according to the indication in the second DCI, and then the effectiveness configuration of the HARQ process can be performed.

In some embodiments, the terminal determines whether "1" in the indicator bit indicates that the HARQ feedback operation of the HARQ process is not performed, or "0" in the indicator bit indicates that the HARQ feedback operation of the HARQ process is not performed according to a protocol or an indication from the network device. In a case that "1" indicates that the HARQ feedback operation of the HARQ process is not performed, and "0" indicates that the HARQ feedback operation of the HARQ process is performed, if the indicator bit is "1", it is determined that the HARQ feedback operation of the HARQ process scheduled by the scheduling instruction is not performed, and the effectiveness configuration of the HARQ process is configured to be disabled. If the indicator bit is "0", it is determined that the HARQ feedback operation of the HARQ process scheduled by the scheduling instruction is performed, and the effectiveness configuration of the HARQ process is configured to be enabled.

In the present invention, the terminal receives the second DCI. The second DCI includes the scheduling instruction, and the scheduling instruction includes an indicator bit used to indicate the HARQ feedback operation of the HARQ process corresponding to the scheduling instruction. Afterwards, the terminal determines the HARQ process scheduled by the scheduling instruction. If the indicator bit indicates that a HARQ feedback operation of the scheduled HARQ process is performed, the scheduled HARQ processes is configured to be enabled. If the indicator bit indicates that the HARQ feedback operation of the scheduled HARQ process is not performed, the scheduled HARQ process is configured to be disabled. Therefore, the terminal can accurately determine the HARQ feedback operation corresponding to the HARQ process scheduled by the scheduling instruction in the second DCI through the indicator bit contained in the received second DCI in a timely manner, and then performs the effectiveness configuration of the HARQ process.

FIG. 5 is a flowchart of another method for configuring a HARQ provided by an embodiment of the present invention. The method provided in this embodiment is performed by a terminal. As illustrated in FIG. 5, the method includes, but is not limited to, the following steps.

At step 501, a HARQ configuration instruction is obtained.

At step 502, in a case that there are a plurality of HARQ configuration instructions, when there are conflicting HARQ configuration instructions, an effectiveness configuration of the HARQ process is performed according to the configuration instruction that is obtained earlier.

For example, if the terminal first receives a configuration instruction 1, which indicates that the HARQ feedback operations of all HARQ processes on slot 1 to slot 10 are supported, and then it receives a configuration instruction 2, which is used to indicate the HARQ feedback operation of the HARQ process on at least one slot from slot 1 to slot 10, the terminal does not expect the configuration instruction 2 to indicate that the HARQ feedback operation on the at least one slot from slot 1 to slot 10 is not performed.

That is, if the terminal first receives the configuration instruction 1, which indicates that the HARQ feedback operations of all HARQ processes on slot 1 to slot 10 are supported, and then receives the configuration instruction 2, which indicates that a HARQ feedback operation on at least one slot on slot 1 to slot 10 is no supported, it ignores the configuration instruction 2, and configures the effectiveness configuration of the HARQ process based on the configuration instruction 1.

In this embodiment of the present invention, the HARQ configuration instruction is obtained first. In a case that there are a plurality of HARQ configuration instructions, if there are conflicting HARQ configuration instructions, the effectiveness configuration of the HARQ process is performed based on the configuration instruction that is obtained earlier. Therefore, after receiving a plurality of configuration instructions, when there are conflicting configuration instructions, the terminal can perform the effectiveness configuration for the HARQ process based on the configuration instruction that is obtained earlier, so that whether the HARQ feedback operation corresponding to the HARQ process scheduled by the scheduling instruction in the second DCI is performed can be determined accurately in a timely manner, to avoid confusion when determining the HARQ feedback operation corresponding to the HARQ process due to conflicting configuration instructions.

FIG. 6 is a flowchart of another method for configuring a HARQ provided by an embodiment of the present invention. The method provided in this embodiment is performed by a terminal. As illustrated in FIG. 6, the method includes, but is not limited to, the following steps.

At step 601, a semi-static configuration or a default configuration of HARQ is obtained.

In an embodiment of the present invention, the network device can semi-statically configure the HARQ process supported by the terminal in the high-layer configuration information, and the terminal can determine the semi-static configuration corresponding to the HARQ process through the high-layer configuration information sent by the network device. For example, the high-layer configuration information indicates that the HARQ feedback operation of the HARQ process is performed.

In an embodiment of the present invention, the terminal can determine the default configuration of HARQ according to predefined rules. For example, the HARQ feedback operation of the HARQ process is not performed by default.

At step 602, a HARQ configuration instruction is obtained.

In an embodiment of the present invention, the configuration signaling may be an RRC signaling, a MAC CE, a physical layer signaling, or DCI.

At step 603, effectiveness configurations are configured for one or more of HARQ processes supported by the terminal according to the configuration instruction.

The specific implementation processes of step 602 and step 603 can refer to the detailed description of any embodiment of the present invention, which will not be repeated here.

At step 604, if there is no configuration instruction for a HARQ process, an effectiveness configuration is configured for the HARQ process according to the semi-static configuration or the default configuration.

For example, for semi-static configuration, if the terminal receives the high-layer configuration information sent by the network device, which indicates that the feedback operations corresponding to all HARQ processes are supported, and there is no configuration instruction for indicating whether a HARQ feedback operation of a HARQ process 1 on slot 1 to slot 10 is performed, the terminal decides that HARQ feedback is required for data transmission of the HARQ process 1 on slot 1 to slot 10 according to the high-layer configuration information.

For example, for the default configuration, if the predefined rule is that the feedback operations corresponding to all HARQ processes are not supported, and there is no configuration instruction for indicating whether the HARQ feedback operation of the HARQ process 1 on slot 1 to slot 10 is performed, the terminal decides that it is unnecessary to perform HARQ feedback for data transmission of the HARQ process 1 according to the predefined rule.

In this embodiment of the present invention, the terminal first obtains the semi-static configuration or default configuration of HARQ and then obtains the HARQ configuration instruction, and configures the effectiveness configurations for one or more HARQ processes supported by the terminal according to the configuration instruction. If it has not received a configuration instruction for a certain HARQ process, the effectiveness configuration of the HARQ process is configured according to the semi-static configuration or the default configuration. Therefore, by combining the configuration instruction with the semi-static configuration or the default configuration, the HARQ feedback operation corresponding to each HARQ process supported by the terminal at each moment can be determined accurately and completely in a timely manner.

FIG. 7 is a flowchart of another method for configuring a HARQ provided by an embodiment of the present invention. The method provided in this embodiment is performed by a terminal. As illustrated in FIG. 7, the method includes, but is not limited to, the following steps.

At step 701, a HARQ configuration instruction is obtained.

The specific implementation process of the above step 701 can refer to the detailed description of any embodiment of the present invention, which will not be repeated here.

At step 702, for a pre-configured transmission, an effectiveness configuration is configured according to a semi-static configuration or a configuration instruction.

For example, the pre-configured transmission may be semi-persistent scheduling (SPS).

In an implementation, the terminal is configured with eight HARQ processes, which are semi-statically configured as supporting HARQ feedback operations. The terminal uses the HARQ process 1 to perform the pre-configured transmission. When the terminal receives the configuration instruction indicating that the HARQ process 1 does not support the HARQ feedback operation, the terminal can perform the HARQ feedback operation (according to the semi-static configuration) or does not perform the HARQ feedback operation (according to the configuration instruction) when performing the pre-configured transmission of the HARQ process 1.

In this embodiment of the present invention, the terminal first obtains the HARQ configuration instruction, and then configures the effectiveness configuration according to the semi-static configuration or configuration instruction for the pre-configured transmission. Therefore, for the pre-configured transmission, the effectiveness configuration of the HARQ process required for executing the pre-configured transmission can be flexibly configured according to the semi-static configuration or the configuration instruction, thereby improving the flexibility of the effectiveness configuration of the HARQ process.

FIG. 8 is a flowchart of another method for configuring a HARQ provided by an embodiment of the present invention. The method provided in this embodiment is performed by a network device. As illustrated in FIG. 8, the method includes, but is not limited to, the following steps.

At step 801, a HARQ configuration instruction is sent, in which the configuration instruction is used for performing an effectiveness configuration for one or more of HARQ processes supported by a terminal.

In an embodiment of the present invention, the HARQ configuration instruction sent by the network device may be an RRC signaling, a MAC CE, a physical layer signaling or DCI, which is not limited in the present invention.

There may be one or more HARQ configuration instructions. That is, the DCI may carry configuration instructions of one or more HARQ processes, or the RRC signaling may carry configuration instructions of one or more HARQ processes, or the MAC CE may carry configuration instructions of one or more HARQ processes, which is not limited in the present invention.

In an embodiment of the present invention, the configuration instruction is used to indicate whether one or more of the HARQ processes supported by the terminal support(s) HARQ feedback or not. The terminal can perform the effectiveness configuration(s) of one or more HARQ processes according to whether the one or more HARQ processes support HARQ feedback.

In an embodiment of the present invention, if the configuration instruction indicates that the HARQ feedback operation of the HARQ process is performed, the HARQ process is configured as enabled. If the configuration instruction indicates that the HARQ feedback operation of the HARQ process is not performed, the HARQ process is configured as disabled.

For example, in a case that the configuration instruction indicates the HARQ feedback operations of three HARQ processes at the same time, if it indicates that the HARQ feedback operation of the HARQ process 1 is performed, the terminal configures the effectiveness configuration of the HARQ process 1 to be enabled. If the network device indicates that the HARQ feedback operation of the HARQ process 2 is not performed, the terminal configures the effectiveness configuration of the HARQ process 2 to be disabled. If the network device indicates that the HARQ feedback operation of the HARQ process 3 is not performed, the terminal can configure the effectiveness configuration of the HARQ process 3 to be disabled.

In this embodiment of the present invention, the network device sends the HARQ configuration instruction to the terminal. The configuration instruction is used to configure the effectiveness configurations of one or more of HARQ processes supported by the terminal. Therefore, the network device sends the configuration instruction for performing the effectiveness configuration of one or more HARQ processes to the terminal, so that the terminal can accurately determine the HARQ feedback operations corresponding to the one or more HARQ processes of the supported HARQ processes according to the configuration instruction in a timely manner, and then configure the effectiveness configurations of the HARQ processes.

FIG. 9 is a flowchart of another method for configuring a HARQ provided by an embodiment of the present invention. The method provided in this embodiment is performed by a network device. As illustrated in FIG. 9, the method includes, but is not limited to, the following steps.

At step 901, first DCI is sent, in which the first DCI includes an information field, and the information field includes HARQ feedback operations of each HARQ process supported by a terminal.

In this embodiment of the present invention, the first DCI may be DCI that carries control information, and the HARQ feedback operations of all target HARQ processes supported by the terminal are carried in a preset or configurable information field of the first DCI.

In an embodiment of the present invention, information corresponding to each bit in the information field is used to indicate whether a HARQ feedback operation of a corresponding HARQ process is performed. For example, the bit value "1" indicates that the HARQ feedback operation of the HARQ process is not performed, and the bit value "0" indicates that the HARQ feedback operation of the HARQ process is performed.

For example, if the terminal is configured with eight HARQ processes, the HARQ feedback operations of the eight HARQ processes can be indicated by eight bits in the information field of the first DCI.

In an embodiment of the present invention, a correspondence relationship between a bit sequence number and a HARQ process number can be predefined or pre-configured, so that the terminal can accurately determine which target HARQ process each bit in the information field indicates.

In an embodiment of the present invention, the first DCI may also include a target duration, and the HARQ feedback operation of the HARQ process indicated by the first DCI is effective within the target duration.

In some embodiments, the first DCI may configure a corresponding target duration for each HARQ process, and the target durations corresponding to each HARQ process may be the same or different, which is not limited herein.

In some implementations, the terminal can obtain a set of information on the duration in a predefined way or by receiving the configuration information sent by the network device, and then indicate the target duration corresponding to each HARQ process in the information field used to indicate the target duration in the first DCI.

In this embodiment of the present invention, the network device sends the first DCI to the terminal. The first DCI includes an information field, and the information field includes HARQ feedback operations of each HARQ process supported by the terminal. Therefore, the network device indicates whether the HARQ process supported by the terminal supports the HARQ feedback operation through the information field in the first DCI, so that the terminal can configure the effectiveness configuration of the HARQ process according to the HARQ feedback operation of the HARQ process. In this way, the terminal can accurately determine the HARQ feedback operation corresponding to the HARQ process in a timely manner and perform the effectiveness configuration of the HARQ process.

FIG. 10 is a flowchart of another method for configuring a HARQ provided by an embodiment of the present invention. The method provided in this embodiment is performed by a network device. As illustrated in FIG. 10, the method includes, but is not limited to, the following steps.

At step 1001, second DCI is sent, in which the second DCI includes a scheduling instruction, the scheduling instruction includes an indicator bit, and the indicator bit is used to indicate a HARQ feedback operation of a HARQ process corresponding to the scheduling instruction.

In this embodiment of the present invention, the second DCI may be DCI that carries the scheduling instruction. After receiving the second DCI, the terminal determines the HARQ feedback operation of the HARQ process scheduled by the scheduling instruction according to the indicator bit contained in the scheduling instruction.

The indicator bit is a bit in the scheduling instruction. In an embodiment of the present invention, if the indicator bit is "1", it indicates that the HARQ feedback operation of the HARQ process scheduled by the scheduling instruction is not performed, and if the indicator bit is "0", it indicates that the HARQ feedback operation of the HARQ process scheduled by the scheduling instruction is performed.

For example, if the terminal is configured with eight HARQ processes, when the terminal receives the scheduling instruction contained in the second DCI and schedules data transmission of HARQ process 1, the HARQ feedback operation of the HARQ process 1 can be determined according to the one corresponding indicator bit in the scheduling instruction.

In an embodiment of the present invention, the second DCI includes a target duration, and the HARQ feedback operation of the HARQ process indicated by the second DCI is effective within the target duration.

In some implementations, the network device obtains a set of information on the duration in a predefined way, and then indicates the target duration corresponding to the scheduled HARQ process in the information field used to indicate the target duration of the scheduled HARQ process in the second DCI.

In this embodiment of the present invention, the network device sends the second DCI to the terminal. The second DCI includes a scheduling instruction, the scheduling instruction includes an indicator bit, and the indication bit is used to indicate the HARQ feedback operation of the HARQ process corresponding to the scheduling instruction. Therefore, the network device indicates the HARQ feedback operation corresponding to the HARQ process scheduled by the scheduling instruction through the indicator bit in the second DCI, so that the terminal can accurately determine the HARQ feedback operation corresponding to the HARQ process scheduled by the scheduling instruction according to the indicator bit in a timely manner, and then perform the effectiveness configuration of the HARQ process scheduled by the scheduling instruction.

FIG. 11 is a schematic diagram of a communication device 1100 provided by an embodiment of the present invention. The communication device 1100 shown in FIG. 11 may include a transceiver module 1101 and a processing module 1102. The transceiver module 1101 may include a sending module and/or a receiving module. The sending module is used for realizing a sending function, and the receiving module is used for realizing a receiving function. The transceiver module 1101 may realize the sending function and/or the receiving function.

It is understandable that the communication device 1100 may be a terminal, a device in the terminal, or a device that can be used together with the terminal.

When the communication device is at the terminal side,
the transceiver module 1101 is configured to obtain a HARQ configuration instruction; and
the processing module 1102 is configured to perform effectiveness configurations for one or more of HARQ processes supported by the terminal according to the configuration instruction.

In an embodiment of the present invention, the transceiver module 1101 is configured to:

receiving first DCI, in which the first DCI includes an information field, and the information field includes HARQ feedback operations of each HARQ process supported by the terminal.

In an embodiment of the present invention, the processing module 1102 is configured to:
obtain the information field of the first DCI;
if the information field indicates that a HARQ feedback operation of a HARQ process is performed, configure the HARQ processes to be enabled; and
if the information field indicates that the HARQ feedback operation of the HARQ process is not performed, configure the HARQ process to be disabled.

In an embodiment of the present invention, information corresponding to each bit in the information field is used to indicate whether a HARQ feedback operation of a HARQ process.

In an embodiment of the present invention, the transceiver module 1101 is configured to:
receive second DCI, in which the second DCI includes a scheduling instruction, the scheduling instruction includes an indicator bit, and the indicator bit is used to indicate a HARQ feedback operation of a HARQ process corresponding to the scheduling instruction.

In an embodiment of the present invention, the processing module 1102 is configured to:
determine a HARQ process scheduled by the scheduling instruction;
if the indicator bit indicates that a HARQ feedback operation of the scheduled HARQ process is performed, configure the scheduled HARQ processes to be enabled; and
if the indicator bit indicates that the HARQ feedback operation of the scheduled HARQ process is not performed, configure the scheduled HARQ process to be disabled.

In an embodiment of the present invention, the first DCI or the second DCI includes a target duration, and the HARQ feedback operation of the HARQ process indicated by the first DCI or the second DCI is enabled within the target duration.

In an embodiment of the present invention, in a case that there are a plurality of HARQ configuration instructions,
when there are conflicting HARQ configuration instructions, the processing module 1102 is configured to: perform an effectiveness configuration of the HARQ process according to the configuration instruction that is obtained earlier.

In an embodiment of the present invention, the processing module 1102 is configured to:
obtain a semi-static configuration or a default configuration of HARQ; and
if there is no configuration instruction for a HARQ process, configure an effectiveness configuration for the HARQ process according to the semi-static configuration or the default configuration.

In an embodiment of the present invention, the processing module 1102 is configured to:
for a pre-configured transmission, configure an effectiveness configuration according to a semi-static configuration or a configuration instruction.

In the present invention, the terminal obtains the HARQ configuration instruction, and performs the effectiveness configurations for one or more of HARQ processes supported by the terminal according to the configuration instruction. Therefore, the terminal can accurately determine the HARQ feedback operations corresponding to one or more HARQ processes of the supported HARQ processes according to the configuration instruction in a timely manner, and configures the effectiveness configurations for the HARQ processes.

When the communication device 1100 is at the network device side,
the transceiver module 1101 is configured to: send a HARQ configuration instruction, in which the configuration instruction is used for performing an effectiveness configuration for one or more of HARQ processes supported by a terminal.

In an embodiment of the present invention, the processing module 1102 is configured to:
send first DCI, in which the first DCI includes an information field, and the information field includes HARQ feedback operations of each HARQ process supported by the terminal.

In an embodiment of the present invention, information corresponding to each bit in the information field is used to indicate whether a HARQ feedback operation of a HARQ process.

In an embodiment of the present invention, the processing module 1102 is configured to:
sending second DCI, in which the second DCI includes a scheduling instruction, the scheduling instruction includes an indicator bit, and the indicator bit is used to indicate a HARQ feedback operation of a HARQ process corresponding to the scheduling instruction.

In an embodiment of the present invention, the first DCI or the second DCI includes a target duration, and the HARQ feedback operation of the HARQ process indicated by the first DCI or the second DCI is enabled within the target duration.

In the present invention, the network device sends the HARQ configuration instruction to the terminal. The configuration instruction is used for performing an effectiveness configuration for one or more of HARQ processes supported by the terminal. Therefore, the network device sends the configuration instruction for performing an effectiveness configuration for one or more HARQ processes to the terminal, so that the terminal can accurately determine the HARQ feedback operations corresponding to the one or more HARQ processes of the supported HARQ processes according to the configuration instruction in a timely manner, and then perform the effectiveness configurations for the HARQ processes.

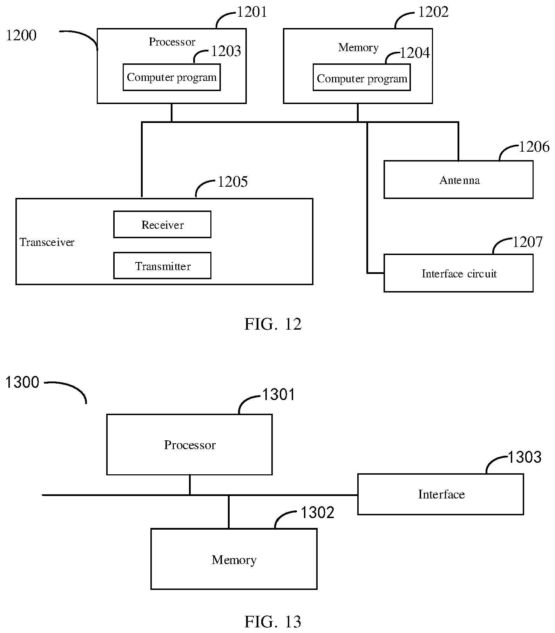

FIG. 12 is a schematic diagram of a communication device 1200 provided by an embodiment of the present invention. The communication device 1200 may be a network device, a terminal, or a chip, a chip system or a processor that supports the network device to realize the above-described method, or a chip, a chip system or a processor that supports the terminal to realize the above-described method. The device is used to realize the methods described in the above method embodiments with reference to the descriptions of the above-described method embodiments.

The communication device 1200 may include one or more processors 1201. The processor 1201 may be a general purpose processor or a dedicated processor, such as, a baseband processor or a central processor. The baseband processor is used for processing communication protocols and communication data. The central processor is used for controlling communication devices (e.g., base station, baseband chip, terminal, terminal chip, CU or DU), executing computer programs, and processing data of the computer programs.

In an embodiment of the present invention, the communication device 1200 may further include one or more memories 1202 on which a computer program 1204 may be stored. When the processor 1201 executes the computer program 1204, the communication device 1200 is caused to perform the methods described in the above method embodiments. In an embodiment of the present invention, data may also be stored in the memory 1202. The communication device 1200 and the memory 1202 may be provided separately or may be integrated together.

In an embodiment of the present invention, the communication device 1200 may also include a transceiver 1205 and an antenna 1206. The transceiver 1205 may be referred to as transceiver unit, transceiver machine, or transceiver circuit, for realizing a transceiver function. The transceiver 1205 may include a receiver and a transmitter. The receiver may be referred to as receiver machine or receiving circuit, for realizing a receiving function. The transmitter may be referred to as transmitter machine or transmitting circuit, for realizing a transmitting function.

In an embodiment of the present invention, the communication device 1200 may also include one or more interface circuits 1207. The interface circuits 1207 are used to receive code instructions and transmit the code instructions to the processor 1201. The processor 1201 runs the code instructions to cause the communication device 1200 to perform the methods described in the method embodiments.

The transceiver 1205 in the communication device 1200 is used to perform the transceiving steps in the above figures, and the processor 1201 is used to perform the processing steps in the above figures.

In an implementation, the processor 1201 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor 1201 may store a computer program 1203 that can be run by the processor 1201 and may cause the communication device 1200 to perform the methods described in the method embodiments above. The computer program 1203 may be solidified in the processor 1201, in which case the processor 1201 may be implemented by hardware.

In an implementation, the communication device 1200 may include circuits. The circuits may implement the sending, receiving or communicating function in the preceding method embodiments. The processor and the transceiver described in the present invention may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver may be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the descriptions of the above embodiments may be a network device or a smart relay, but the scope of the communication device described in the present invention is not limited thereto, and the structure of the communication device may not be limited by FIG. 12. The communication device may be a stand-alone device or may be part of a larger device. For example, the communication device may be:
(1) a stand-alone IC, chip, chip system or subsystem;
(2) a collection of ICs including one or more ICs, the collection of ICs may also include storage components for storing data and computer programs;
(3) an ASIC, such as a modem;
(4) modules that can be embedded within other devices;
(5) receivers, terminals, smart terminals, cellular phones, wireless devices, handheld machines, mobile units, in-vehicle devices, network devices, cloud devices, artificial intelligence devices, and the like; and
(6) others.

The case that the communication device is a chip or a chip system can refer to the schematic diagram of the chip 1300 shown in FIG. 13. The chip shown in FIG. 13 includes a processor 1301 and an interface 1302. There may be one or more processors 1301, and there are multiple interfaces 1302.

There is a case where the chip is used to realize the functions of the terminal in the embodiments of the present invention.

In an embodiment of the present invention, the chip further includes a memory 1003 for storing necessary computer programs and data.

It is understandable by those skilled in the art that various illustrative logical blocks and steps listed in the embodiments of the present invention may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the present invention.

The present invention also provides a readable storage medium having an instruction stored thereon. When the instruction is executed by a computer, the function of any of the method embodiments described above is implemented.

The present invention also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the present invention are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device integrated by one or more usable mediums such as a server and a data center. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the present invention are only described for the convenience of differentiation, and are not used to limit the scope of the embodiments of the present invention, or indicate the order of precedence.

The term "at least one" in the present invention may also be described as one or more, and the term "multiple" may be two, three, four or more, which is not limited in the present invention. In the embodiments of the present invention, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in the present invention may be configured or may be predefined. The values of information in the tables are merely examples and may be configured to other values, which are not limited by the present invention. In configuring the correspondence between the information and the parameter, it is not necessarily required that all the correspondences illustrated in the tables must be configured. For example, the correspondences illustrated in certain rows in the tables in the present invention may not be configured. For another example, the above tables may be adjusted appropriately, such as splitting, combining, and the like. The names of the parameters shown in the titles of the above tables may be other names that may be understood by the communication device, and the values or representations of the parameters may be other values or representations that can be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in the present invention may be understood as define, pre-define, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the present invention.

It is clearly understood by those skilled in the field to which it belongs that, for the convenience and brevity of description, the specific working processes of the systems, apparatuses, and units described above reference may be made to the corresponding processes in the preceding method embodiments, and details will not be repeated herein.

The above are only specific implementations of the present invention, but the scope of protection of the present invention is not limited thereto. Those skilled in the art familiar to the technical field may easily think of changes or substitutions in the technical scope disclosed by the present invention, which shall be covered by the scope of protection of the present invention. Therefore, the scope of protection of the present invention shall be governed by the scope of protection of the attached claims.

## Claims

1. A method for configuring a hybrid automatic repeat request (HARQ), performed by a terminal, comprising:
obtaining a HARQ configuration instruction; and
performing an effectiveness configuration for one or more of HARQ processes supported by the terminal according to the configuration instruction.

2. The method of claim 1, wherein obtaining the HARQ configuration instruction comprises:
receiving first downlink control information (DCI), wherein the first DCI comprises an information field, and the information field comprises HARQ feedback operations of the HARQ processes supported by the terminal.

3. The method of claim 2, wherein performing the effectiveness configuration for the one or more of HARQ processes supported by the terminal according to the configuration instruction comprises:
obtaining the information field of the first DCI;
the information field indicates that the HARQ feedback operation of the HARQ process being performed, configuring the HARQ process to be enabled; and
the information field indicates that the HARQ feedback operation of the HARQ process being not performed, configuring the HARQ process to be disabled.

4. The method of claim 2, wherein information corresponding to each bit in the information field is used to indicate the HARQ feedback operation of one HARQ process.

5. The method of claim 1, wherein obtaining the HARQ configuration instruction comprises:
receiving second DCI, wherein the second DCI comprises a scheduling instruction, the scheduling instruction comprises an indicator bit, and the indicator bit is used to indicate the HARQ feedback operation of the HARQ process corresponding to the scheduling instruction.

6. The method of claim 5, wherein performing the effectiveness configuration for one or more of HARQ processes supported by the terminal according to the configuration instruction comprises:
determining the HARQ process scheduled by the scheduling instruction;
the indicator bit indicates that the HARQ feedback operation of the scheduled HARQ process being supported, configuring the scheduled HARQ processes to be enabled; and
the indicator bit indicates that the HARQ feedback operation of the scheduled HARQ process being not supported, configuring the scheduled HARQ process to be disabled.

7. The method of any one of claims 2 to 6, wherein the first DCI or the second DCI comprises a target duration, and the HARQ feedback operation of the HARQ process indicated by the first DCI or the second DCI is enabled within the target duration.

8. The method of claim 1, wherein in a case that there are a plurality of HARQ configuration instructions, when there are conflicting HARQ configuration instructions, the effectiveness configuration of the HARQ process is performed according to the configuration instruction that is obtained earlier.

9. The method of claim 1, further comprising:
obtaining a semi-static configuration or a default configuration of HARQ; and
performing the effectiveness configuration for the HARQ process which is not configured by the configuration instruction, according to the semi-static configuration or the default configuration.

10. The method of claim 1, further comprising:
performing an effectiveness configuration for a pre-configured transmission according to a semi-static configuration or a configuration instruction.

11. A method for configuring a hybrid automatic repeat request (HARQ), performed by a network device, comprising:
sending a HARQ configuration instruction, wherein the configuration instruction is used for performing an effectiveness configuration for one or more of HARQ processes supported by a terminal.

12. The method of claim 11, wherein sending the HARQ configuration instruction comprises:
sending first downlink control information (DCI), wherein the first DCI comprises an information field, and the information field comprises HARQ feedback operations of the HARQ processes supported by the terminal.

13. The method of claim 12, wherein information corresponding to each bit in the information field is used to indicate the HARQ feedback operation of one HARQ process.

14. The method of claim 11, wherein sending the HARQ configuration instruction comprises:
sending second DCI, wherein the second DCI comprises a scheduling instruction, the scheduling instruction comprises an indicator bit, and the indicator bit is used to indicate the HARQ feedback operation of the HARQ process corresponding to the scheduling instruction.

15. The method of any one of claims 12 to 14, wherein the first DCI or the second DCI comprises a target duration, and the HARQ feedback operation of the HARQ process indicated by the first DCI or the second DCI is enabled within the target duration.

16. A terminal, comprising:
a transceiver module, configured to obtain a HARQ configuration instruction; and
a processing module, configured to perform an effectiveness configuration for one or more of HARQ processes supported by the terminal according to the configuration instruction.

17. A network device, comprising:
a transceiver module, configured to send a HARQ configuration instruction, wherein the configuration instruction is used for performing an effectiveness configuration for one or more of HARQ processes supported by a terminal.

18. A communication device, comprising a processor and a memory, wherein the memory stores a computer program, and the processor executes the computer program stored in the memory to cause the device to execute the method according to any one of claims 1-10 or the method according to any one of claims 11-15.

19. A communication device, comprising: a processor and an interface circuit;
wherein the interface circuit is configured to receive code instructions and transmit the code instructions to the processor; and
the processor is configured to run the code instructions to execute the method according to any one of claims 1-10 or the method according to any one of claims 11-15.

20. A communication system, comprising an Internet of Things (IoT) terminal and a network device;
wherein the IoT terminal is configured to execute the method according to any one of claims 1-10; and
the network device is configured to execute the method according to any one of claims 11-15.

21. A computer readable storage medium for storing instructions, wherein when the instructions are executed, the method according to any one of claims 1-10 or the method according to any one of claims 11-15 is implemented.
